**Europäisches Patentamt**

**European Patent Office**

**Office européen des brevets**

(19)

(11) Publication number : **0 333 360 B1**

(12)

# EUROPEAN PATENT SPECIFICATION

(45) Date of publication of patent specification :
**20.05.92 Bulletin 92/21**

(51) Int. Cl.⁵ : **H05K 5/00, H02B 1/28**

(21) Application number : **89302201.2**

(22) Date of filing : **06.03.89**

(54) **Flameproof enclosure.**

(30) Priority : **16.03.88 GB 8806269**

(43) Date of publication of application :
**20.09.89 Bulletin 89/38**

(45) Publication of the grant of the patent :
**20.05.92 Bulletin 92/21**

(84) Designated Contracting States :
**AT BE CH DE ES FR GR IT LI LU NL SE**

(56) References cited :
**DE-U- 6 903 040**

(73) Proprietor : **AVIATION MICROFILM LIMITED**
**Unit 2, Old Arley Industrial Estate Spring Hill**
**Old Arley Near Coventry CV7 8FG (GB)**

(72) Inventor : **Sandy, Anthony Owen c/o Aviation**
**Microfilm Limited**
**Unit 2 Old Arley Industrial Estate Spring Hill**
**Old Arley Near Coventry CV7 8FG (GB)**

(74) Representative : **Cowan, David Robert et al**
**WALFORD AND HARDMAN BROWN 5 The**
**Quadrant**
**Coventry CV1 2EL (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 333 360 B1

## Description

This invention relates to flameproof enclosures.

There are various environments in which there exists the risk of explosion and fire. These include environments in which a mixture of inflammable gas, for example, methane, and air may exist; environments in which inflammable dust may be present; and environments in which inflammable vapour may exist. The different inflammable products give rise to different levels of risk and it has been established that if certain requirements are met these risks can be overcome and eliminated. Thus a risk of explosion generated by an electrical source can be eliminated by enclosing the electrical source in an enclosure so arranged that if inflammable material enters the enclosure and is ignited in the enclosure the resultant flame can not reach the outside of the enclosure. Such an enclosure is termed a flameproof enclosure (see for example DE-U-6 903 040).

It has been established that one aspect of a flameproof enclosure which gives rise to adequate flameproofing is to ensure that, when the parts of the enclosure are assembled, flanges should be provided between the parts, the flanges being spaced apart a small distance and the flanges having a minimum width. This prevents an excessive pressure build up in the enclosure when an explosion takes place therein and, at the same time, it has been found that given the correct gap and flange width any flame cannot pass wholly through the gap to the exterior of the enclosure.

However, despite this knowledge of flameproof enclosures it has been difficult to provide such enclosures in which an element can pass through the wall of the enclosure and be movable relative to said wall particularly when the movement requires adequate clearance between the wall and the element.

An object of the invention is to provide a flameproof enclosure capable of overcoming this problem.

According to the invention a flameproof enclosure includes a wall having an opening therein, an elongate element extending into the enclosure through said opening for movement relative to the wall, flange members carried on the elongate element for movement therewith and one member located on the inside and one on the outside of said wall so that both members lie in close proximity to and are substantially parallel to the inside and outside of said wall respectively, the enclosure being arranged so that the minimum distance between the edge of the opening and the outer edges of the flange members, and the maximum gap between surfaces of the flange members and the respective adjacent inner and outer surfaces of the wall are such that any combustion which takes place within the enclosure is prevented from passing through the opening and reaching the atmosphere outside the enclosure.

Preferably the elongate element is reciprocally movable in its longitudinal direction a limited amount relative to the wall and said movement is substantially free from contact with the sides of the opening. For the latter purpose the sides of the opening are spaced from the elongate element as it passes through the opening.

Conveniently the flange members are generally in the form of discs each having a diameter sufficient to provide said minimum distance and the planes of the discs are at right angles to the axis of the elongate member.

Preferably the wall of the enclosures provides planar surfaces around the opening and the inner surfaces of the flange members are similarly planar and generally parallel to the wall surfaces.

Since the elongate element is movable relative to the wall of the enclosure gaps are capable of developing between the flange members and the inner and outer faces of the wall but the flanges are so located on the element that the maximum gap between the inner or outer wall surface and the inner or outer flange member is within a predetermined amount, for example 0.40 mm.

In one arrangement the elongate element is connected to an electrically operated load cell located within the enclosure and the movement of the element longitudinally is able to effect operation of the load cell. However the enclosure may contain another electrically operated device or devices.

Further features of the invention will appear from the following description of an embodiment of the invention given by way of example only and with reference to the drawings, in which:-

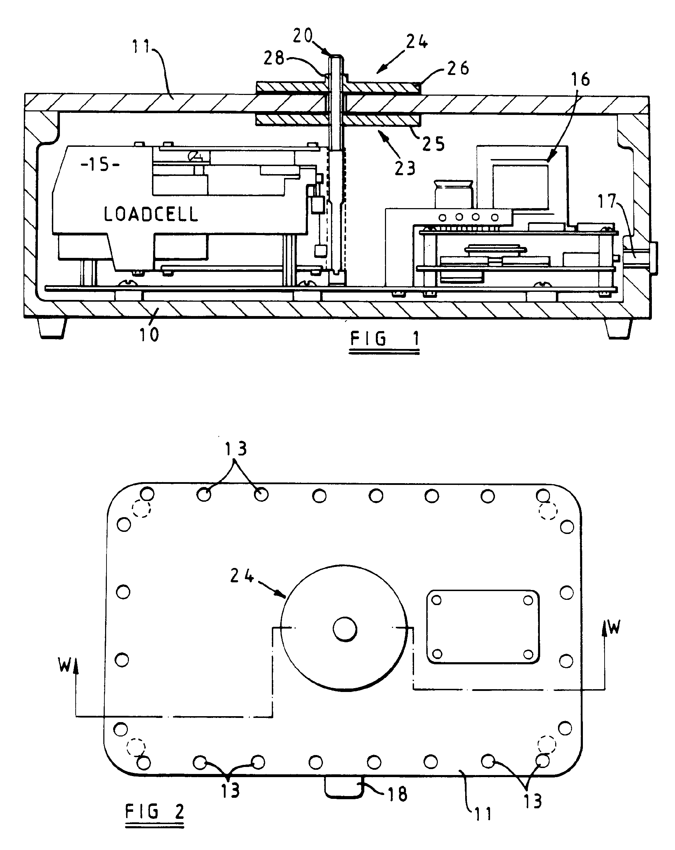

Fig. 1 is a section through a flameproof enclosure along the line W-W in Fig. 2,

Fig. 2 is a plan view of the enclosure of Fig. 1,

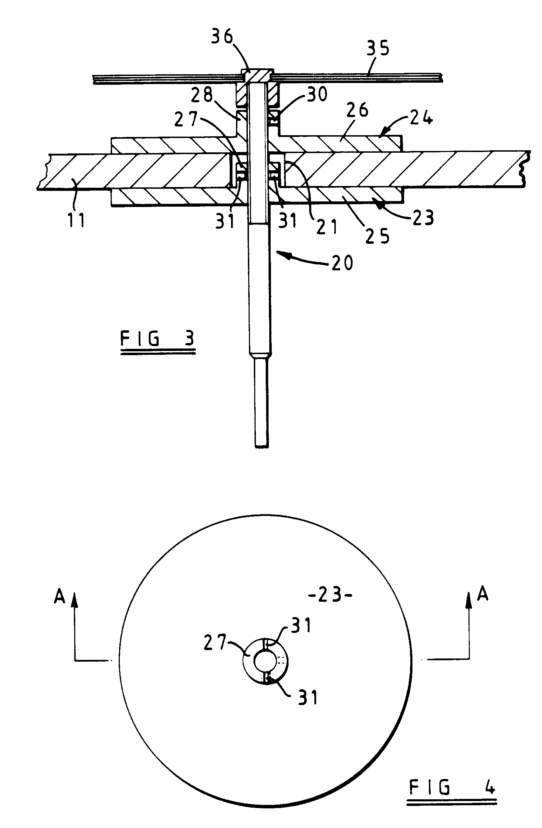

Fig. 3 is an enlarged view of part of the enclosure of Figs. 1 and 2,

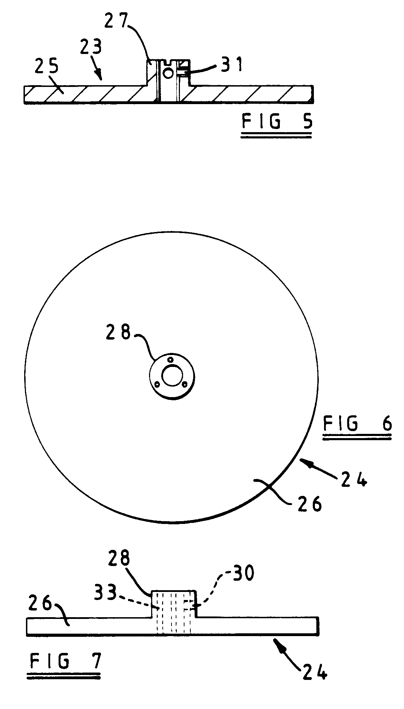

Figs. 4 and 5 are a plan view and a sectional view on line A respectively of a flange member of the enclosure of Figs. 1, 2 and 3, and

Figs. 6 and 7 are similar views to those of Fig. 4 and 5 of another flange member.

Referring to the drawings a flameproof enclosure is shown which is for use in providing an electronically-operated balance or weighing scale but which can find other applications.

The enclosure consists of a base unit 10 onto which is fitted a lid 11, the base unit and lid being secured together by a series of bolts which pass through bores 13 at the edges of the lid 11 into screw-threaded bores in the upper edges of the base unit 10. Thus between them the edges of the lid and the upper edge of the base unit define a flanged connection which is flameproof according to established practice, the flange having a minimum width and a maximum gap to arrest any flame arising within the enclosure. The enclosure is also constructed of materials and of a thickness to withstand any internal explosion of inflammable material, in known manner.

In the illustrated enclosure there is contained a loadcell 15, in the form of a force motor, and electronic components and a transformer 16. Cable entries 17 for supplying electrical power to these units are provided in the usual flameproof manner. Similarly a switch unit 18 is provided for actuating the internal electrically operated units in flameproof manner.

The loadcell 15 is arranged to weigh items externally of the enclosure, for example paint components, which may be in a potentially explosive atmosphere. For this purpose an actuator pin 20 is connected to the loadcell and extends upwardly through an opening 21 formed centrally of the lid 11 of the enclosure. The opening 21 should be large enough that the pin 20 can move freely, to a limited extend, longitudinally of its length.

In order to render the enclosure flameproof, having regard to the need for free access of the pin 20 through the opening 21, there are provided a pair of flange members 23 and 24, a lower, internal flange member 23 and an upper, external flange member 24.

Each of the flange members 23 and 24 includes a generally disc-shaped portion 25 and 26 respectively, the planes of which lie generally parallel to the plane of the lid 11. The members 23 and 24 also each include a hub portion 27 and 28 respectively. In the case of the lower flange member 23 the hub portion 27 projects upwards into the opening 21 so that the internal sides of the hub portion 27 are spaced from the sides of the opening 21. In the case of the upper flange member 24 the hub portion 28 extends upwards so that it stands proud of the upper surface of the member 24.

The flange members 23 and 24 are located in screw-threaded engagement with the pin 20 at specific locations relative to each other and relative to the pin so as to lie closely adjacent the upper and lower surfaces of the lid 11, as will be described. The members 23 and 24 are fixed in such locations by a grub screw 30 passing along a threaded hole transverse of the hub portion 28 of member 24 and similar screws 31 extend through the hub portion 27 of flange member 23. In addition three longitudinal screws 33 extend through the hub portion 28 of member 24 and project from the lower end of the portion 28.

The screws 30 and 31 engage at their inner ends with the pin 20 to fix the flange members in the selected positions. The screws 33 locate the flange members at the selected distance apart by engagement of the lower ends of the screws with the upper end of the hub portion 27 of the lower flange member 23. The screws 33 also serve to ensure that the flange members can be arranged to lie parallel to each other.

The flange members 23 and 24 are arranged to provide flameproofing of the opening 21. This is achieved in one respect by ensuring that the diameters of the disc portions 25 and 26 are sufficient to provide a minimum distance between the outer edge of the opening 21 and the outer edge of the portions 25 and 26. In one arrangement the diameters of the disc portions 25 and 26 are each 110 mms, or greater, with an opening 21 of 16 mms diameter.

In another respect the flameproofing is ensured by providing a maximum gap between each of the flange members 23 and 24 and the adjacent surface of the lid 11. Since the pin 20 and, hence, the associated flanges can move relative to the lid for operation of the loadcell 15 this is brought about by arranging for the maximum gap between the upper flange member 24 and the lid 11 to be when the pin 20 is in its uppermost position. Similarly the maximum gap between the lower flange member 23 and lid is when the pin is in its lowermost position. In each case the other flange member is in contact with the lid surface. In practice such maximum permissable gap is generally 0.4 mm in each case in order to achieve flameproofing in the most dangerous environment.

The upper end of the pin 20 carries a weight pan 35 which includes a hub portion 36 screwed onto the pin. Items to be weighed are located on the pan 35.

It has been found that with the arrangement described full and effective flameproofing of the enclosure is obtained for an element passing freely through the wall of the enclosure and it will be appreciated that flameproof enclosures can be provided for other purposes than weighing in which it is necessary for an element to pass through the wall of the enclosure.

## Claims

1. A flameproof enclosure comprising a wall (11) having an opening (21) therein, and an elongate element (20) extending into the enclosure through said opening for movement relative to the wall, characterised by flange members (23,24) carried on the elongate element (20) for movement therewith with one of the flange members (23) located on the inside and one (24) on the outside of said wall (11) so that both flange members (23,24) lie in close proximity and are substantially parallel to the inside and outside of said wall (11) respectively, the enclosure being arranged so that the minimum distance between an edge of said opening (21) and the outer edges of said flange members (23,24), and the maximum gap between the surfaces of the flange members (23,24) and the respective adjacent inner and outer surfaces of the wall (11) are such that any combustion which takes place within the enclosure is prevented from passing through the opening and reaching the atmosphere outside the enclosure.

2. An enclosure according to Claim 1 characterised in that the elongate element (20) is reciprocally movable in its longitudinal direction a limited amount relative to the wall (11) and said movement is substantially free from contact with the side of the opening (21).

3. An enclosure according to Claim 1 or 2 characterised in that the flange members (23,24) are generally in the form of planar discs each having a diameter sufficient to provide said minimum distance and the planes of the discs are each at a right angle to the axis of the elongate element (20).

4. An enclosure according to Claim 1, 2 or 3 characterised in that the wall (11) of the enclosure adjacent the opening (21) provides inner and outer planar surfaces parallel to the adjacent surfaces of the inner and outer flange members (23,24) respectively.

5. An enclosure according to any one of the preceding claims characterised in that the maximum gap between each of the flange members (23,24) and the adjacent wall surface (11) is about 0.4 mm.

6. An enclosure according to any one of the preceding claims characterised in that the elongate element (20) is connected to an electrically-operated load cell (15) located within the enclosure, movement of the element (20) effecting operation of the load cell (15).

7. An enclosure according to any one of the preceding claims characterised in that each of the flange members (23,24) includes a central hub (27,28) portion surrounding the elongate element (20) and each having means (30,31) for securing the flange member to the elongate element.

8. An enclosure according to Claim 7 characterised in that the hub portion (27) of one of the flange members (23) is located within said opening (21) and spaced from the walls of said opening.

9. An enclosure according to any one of the preceding claims characterised by spacer members (33) extending from one (24) of the flange members towards the other flange member (23) to locate the flange members (23,24) relative to one another in the direction of the elongate element (20).

10. An enclosure according to Claim 9 characterised in that the spacer members (33) are adjustable to vary the spacing between the flange members (23,24) and to adjust the relative positions of the planes of the members.

**Patentansprüche**

1. Flammensicheres Gehäuse, umfassend eine Wand (11) mit einer darin angebrachten Öffnung (21), und ein sich durch die Öffnung in das Gehäuse erstreckendes Langelement (20) für Bewegung in bezug auf die Wand, gekennzeichnet durch Flanschglieder (23, 24), die zur Bewegung mit dem Langelement (20) auf diesem getragen werden, wobei eines der Flanschglieder (23) auf der Innenseite und eines der Flanschglieder (24) auf der Außenseite der Wand (11) angeordnet ist, so daß beide Flanschglieder (23, 24) sich nahe an und im wesentlichen jeweils parallel zur Innen- und zur Außenseite der Wand (11) befinden, wobei das Gehäuse derart angeordnet ist, daß der Mindestabstand zwischen einer Kante der Öffnung (21) und den Außenkanten der Flanschglieder (23, 24) und der maximale Zwischenraum zwischen den Oberflächen der Flanschglieder (23, 24) und der jeweiligen benachbarten Innen- bzw. Außenfläche der Wand (11) derart vorgesehen sind, daß jegliche innerhalb des Gehäuses stattfindende Verbrennung daran gehindert wird, durch die Öffnung zu gelangen und die Atmosphäre außerhalb des Gehäuses zu erreichen.

2. Gehäuse nach Anspruch 1, dadurch gekennzeichnet, daß das Langelement (20) in seiner Längsrichtung in bezug auf die Wand (11) in einem begrenzten Maß wechselweise beweglich ist und daß diese Bewegung im wesentlichen frei von Berührung mit der Seite der Öffnung (21) ist.

3. Gehäuse nach Anspruch 1 oder 2, dadurch gekennzeichnet, daß die Flanschglieder (23, 24) im allgemeinen die Form ebener Scheiben aufweisen, wobei jede einen für das Vorsehen des Mindestabstandes ausreichenden Durchmesser aufweist, und daß die Ebenen der Scheiben jeweils einen rechten Winkel mit der Achse des Langelements (20) bilden.

4. Gehäuse nach Anspruch 1, 2 oder 3, dadurch gekennzeichnet, daß die Wand (11) des Gehäuses neben der Öffnung (21) parallel zu den benachbarten Flächen der inneren und äußeren Flanschglieder (23, 24) jeweils innere und äußere ebene Flächen vorsteht.

5. Gehäuse nach einem der vorstehenden Ansprüche, dadurch gekennzeichnet, daß der maximale Zwischenraum zwischen jedem der Flanschglieder (23, 24) und der benachbarten Wandfläche (11) ungefähr 0,4 mm beträgt.

6. Gehäuse nach einem der vorstehenden Ansprüche, dadurch gekennzeichnet, daß das langelement (20) mit einer innerhalb des Gehäuses angeordneten, elektrisch betriebenen Meßdose (15) verbunden ist, wobei Bewegung des Elements (20) den Betrieb der Meßdose (15) bewirkt.

7. Gehäuse nach einem der vorstehenden Ansprüche, dadurch gekennzeichnet, daß jedes der Flanschglieder (23, 24) einen das Langelement (20) umgebenden zentralen Nabenabschnitt (27, 28) umfaßt, wobei jeder eine Einrichtung (30, 31) zum Befestigen des Flanschgliedes am Langelement aufweist.

8. Gehäuse nach Anspruch 7, dadurch gekennzeichnet, daß der Nabenabschnitt (27) eines der Flanschglieder (23) innerhalb der Öffnung (21) angeordnet und von den Wänden der Öffnung beabstandet ist.

9. Gehäuse nach einem der vorstehenden Ansprüche, gekennzeichnet durch sich von einem (24) der Flanschglieder zum anderen Flanschglied (23) erstreckende Abstandsglieder (33) zur Anordnung der Flanschglieder (23, 24) in bezug aufeinander in Richtung des Langelements (20).

10. Gehäuse nach Anspruch 9, dadurch gekennzeichnet, daß die Abstandsglieder (33) zur Änderung des Abstands zwischen den Flanschgliedern (23, 24) und zur Einstellung der relativen Position der Ebenen der Glieder zueinander einstellbar sind.

**Revendications**

1. Coffret blindé antidéflagrant comprenant une paroi (11) présentant une ouverture (21) dans celle-ci, et un élément allongé (20) s'étendand à l'intérieur du coffret à travers ladite ouverture pour effectuer un déplacement par rapport à la paroi, caractérisé par des membres (23, 24) à bride portés par l'élément allongé (20) pour effectuer un déplacement avec celui-ci, un des membres (23) à bride étant situé sur l'intérieur et un (24) sur l'extérieur de ladite paroi (11) de sorte que les deux membres (23, 24) à bride se trouvent à proximité étroite de et sont sensiblement parallèles à l'intérieur et l'extérieur de ladite paroi (11) respectivement, le coffret étant agencé de sorte que la distance minimum entre le bord de ladite ouverture (21) et les bords extérieurs desdits membres (23, 24) à bride, et l'espace maximum entre les surfaces des membres (23, 24) à bride et les surfaces intérieure et extérieure respectives adjacentes de la paroi (11) sont telles que toute combustion qui a lieu à l'intérieur du coffret est empêchée de passer à travers l'ouverture et d'atteindre l'atmosphère hors du coffret.

2. Coffret selon la revendication 1, caractérisé en ce que l'élément allongé (20) est capable de déplacement en va-et-vient d'une amplitude limitée dans son sens longitudinal par rapport à la paroi (11), et ledit déplacement est sensiblement dépourvu de contact avec le côté de l'ouverture (21).

3. Coffret selon la revendication 1 ou 2, caractérisé en ce que les membres (23, 24) à bride sont en général en forme de disques plans ayant chacun un diamètre suffisant pour fournir ladite distance minimum et les plans des disques sont chacun à angle droit par rapport à l'axe de l'élément allongé (20).

4. Coffret selon la revendication 1, 2 ou 3, caractérisé en ce que la paroi (11) du coffret adjacente à l'ouverture (21) fournit des surfaces planes intérieure et extérieure parallèles aux surfaces adjacentes des membres (23, 24) à bride intérieur et extérieur respectivement.

5. Coffret selon l'une quelconque des revendications précédentes, caractérisé en ce que l'espace maximum entre chacun des membres (23, 24) à bride et la surface (11) de paroi adjacente est environ 0,4 mm.

6. Coffret selon l'une quelconque des revendications précédentes, caractérisé en ce que l'élément allongé (20) est relié à une boîte dynamométrique (15) commandée par électricité, située à l'intérieur du coffret, le déplacement de l'élément (20) effectuant la commande de la boîte dynamométrique (15).

7. Coffret selon l'une quelconque des revendications précédentes, caractérisé en ce que chacun des membres (23, 24) à bride comprend une partie à moyeu (27, 28) centrale entourant l'élément allongé (20) et présentant chacun un moyen (30, 31) destiné à fixer le membre à bride à l'élément allongé.

8. Coffret selon la revendication 7, caractérisé en ce que la partie (27) à moyeu de l'un des membres (23) à bride est située à l'intérieur de ladite ouverture (21) et espacée des parois de ladite ouverture.

9. Coffret selon l'une quelconque des revendications précédentes, caractérisé par des membres (33) d'espacement s'étendant depuis l'un (24) des membres à bride en direction de l'autre membre (23) à bride pour placer les membres (23, 24) à bride l'un par rapport à l'autre dans le sens de l'élément allongé (20).

10. Coffret selon la revendication 9, caractérisé en ce que les membres (33) d'espacement sont ajustables pour varier l'intervalle entre les membres (23, 24) à bride et pour ajuster les positions relatives des plans des membres.

FIG 1

FIG 2

6

FIG 3

FIG 4

FIG 5

FIG 6

FIG 7